# EUROPÄISCHE PATENTSCHRIFT

(11) **EP 0 395 621 B1**
(45) Veröffentlichungstag und Bekanntmachung des Hinweises auf die Patenterteilung: **03.02.1993**
(21) Anmeldenummer: 90890078.0
(22) Anmeldetag: 19.03.1990
(51) Int. Cl.: B62D 25/02, B60J 5/04

(54) **Rammschutzträger für Türen und Seitenwände von Kraftfahrzeugkarosserien**
Shock beam for doors and side panels of superstructures of motor vehicles
Poutre de protection antichoc pour portes et panneaux latéraux de carrosseries de véhicules automobiles

(30) Priorität: 28.03.1989 AT 709/89
(43) Veröffentlichungstag der Anmeldung: 31.10.1990
(73) Patentinhaber: Austria Metall Aktiengesellschaft, A-5282 Braunau am Inn (AT)
(72) Erfinder: Garnweidner, Peter, A-5112 (AT); Üblacker, Peter, A-5111 Bürmoos (AT)
(74) Vertreter: WILHELMS, KILIAN & PARTNER Patentanwälte

(56) Entgegenhaltungen:
- EP-A- 0 267 895

## Beschreibung

Um einen besseren Schutz gegen Verletzungen der Insaßen von Personenkraftwagen bei seitlichen Kollisionen zu erzielen, ist es bekannt, Träger, Rohre, I-Profile oder sonstige Versteifungen in den Türen und/oder Seitenwänden der Fahrzeuge anzubringen.

Diese Träger sind an den Türrahmenteilen oder dem Fahrzeugaufbauholmen befestigt und stützen die dünne Außenverblechung bei Belastungen von außen ab. Bei Unfällen verformt sich der Träger mit der Außenverblechung mit und leitet die auftretenden Kräfte in die mit ihm verbundenen Träger des Türrahmens oder Wagenaufbaues weiter.

Um heute verlangte Sicherheitsnormen zu erfüllen, muß schon am Beginn der Verformung die Widerstandksraft des Trägers nahe an der ertragbaren Belastung des Türrahmens bzw. der Aufbauholme sein, denn je größer die Widerstandskraft vom Beginn der Verformung an ist, desto höher ist die geleistete Verformungsarbeit des Bauteiles Tür oder Seitenwand.

Der Träger soll aber während seines Verformens die Widerstandskraft nur gering erhöhen, um nicht die Festigkeit der angrenzenden Trägerteile oder Rahmenteile vor völliger Deformation der Tür oder Seitenwand zu überschreiten.

Erfindungsgemäß wird dies dadurch erreicht, daß der Druckgurt im Bereich zwischen Mittelzone und Enden jeweils wenigstens eine zur Längserstreckung parallele Ausnehmung aufweist.

Durch die vorhandenen Ausnehmungen im Druckgurt ist die Steifigkeit der Stege reduziert. Dadurch ist, obwohl die Spannungen in diesen Teilen niedriger sind, als in der Mittelzone, beim Überschreiten eines vorher durch Auslegung der Trägergeometrie gewünschten Spannungswertes Ausknicken der Stege in diesem Bereich die Folge. So kann die Widerstandskraft des Trägers bei Verformung über einen langen Weg etwa konstant gehalten werden. Nach dem ausgelegten Verformungsweg fällt die Widerstandskraft ab. Somit ist sichergestellt, daß die Holme nicht überlastet werden und der Rammschutzträger nicht vorzeitig aus diesen ausreißt. Bei heute üblichen Rammschutzträgern steigt die Widerstandskraft dagegen an.

Es sind Träger z.B. aus EP-A- 0 267 895 bekannt, bei denen die Wandstärken durch Löcher geschwächt sind, wodurch die Festigkeit des Trägers verringert ist. Diese Träger halten jedoch ihre Festigkeitswerte lediglich durch die geringeren Querschnittflächen.

In diesen Querschnitten erfolgt dann das Fließen des Werkstoffes. Bei unserem Träger kommt es zu keinem Fließen durch hohe Spannungen in den Querschnitten, wo im Druckgurt Schlitze oder Ausnehmungen angeordnet sind, sondern zum Ausknicken durch mangelnde Stabilität der Stege.

Im Bereich des geschlossenen Profils der Mittelzone unseres Rammschutzträgers tritt nämlich eine Koppelung zwischen den beiden Stegen auf, wodurch eine wesentlich höhere Knicksteifigkeit gegeben ist. In dieser Zone ist daher die ertragbare Spannung für die Festigkeit des Trägers ausschlaggebend. In der geschlitzten Zone hingegen ist die Knicksteifigkeit der Stege und nicht die Spannung für die Verformung ausschlaggebend.

In weiterer Ausgestaltung wird der Rammschutzträger durch jeweils eine Ausnehmung auf einer Seite zu der ihr auf der anderen Seite der Mittelzone gegenüberliegende, etwa die gleiche Längsachse hat, gekennzeichnet.

Dadurch kann eine gleichmäßige Deformation des Trägers erreicht werden und es erfolgt kein Verdrillen während der Verformung.

Es ist besonders vorteilhaft, daß das Hohlprofil zwei Stege aufweist und die Längsachse der Ausnehmung im Schnitt der durch den Druckgurt verlaufende Trägheitshauptachse und dem Druckgurt angeordnet ist.

Diese Bauweise ist einfach herzustellen und auch bei an die Fahrzeugaußenform angepaßten Druckgurt ist eine verdrillungsfreie Verformung gegeben.

Die Erfindung wird anhand nachfolgender Zeichnungen erläutert.

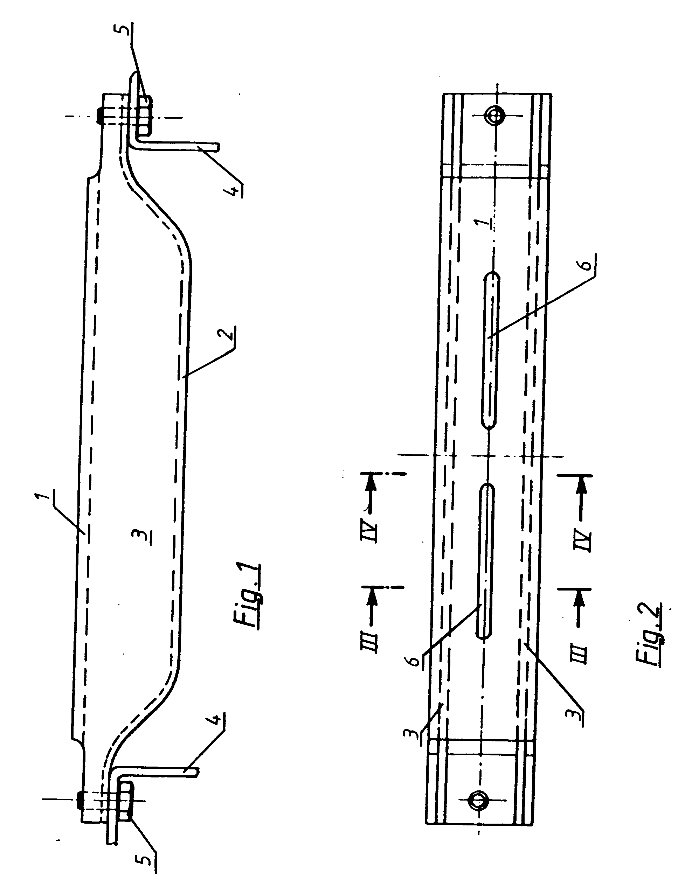

Fig. 1 zeigt einen erfindungsgemäßen Rammschutzträger in einer Tür in Ansicht von oben.
Fig. 2 einen erfindungsgemäßen Rammschutzträger in Ansicht von Druckgurtseite.
Fig. 3 einen erfindungsgemäßen Rammschutzträger längs III-III in Fig. 2.
Fig. 4 einen erfindungsgemäßen Rammschutzträger längs IV-IV in Fig. 2.
Fig. 5 einen erfindungsgemäßen Rammschutzträger in Belastung durch einen Prüfstempel.
Fig. 6 den deformierten Querschnitt längs VI-VI in Fig.5.

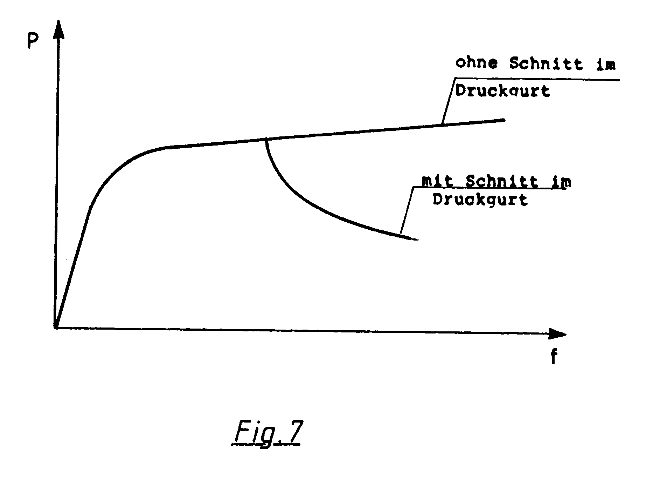

Fig. 7 Kraft-Weg-Diagramm eines erfindungsgemäßen Rammschutzträgers im Vergleich zu einem Rammschutzträger ohne Ausnehmungen.

Der Druckgurt 1 ist an den Enden im Bereich der Befestigung am Türrahmen 4 zurückgeschnitten, während der Zuggurt 2 über die volle Länge verläuft. Die Ausnehmungen 6 sind zwischen der Mittelzone und den Enden im Druckgurt 1 angeordnet. Die Stege 3 sind ohne Schwächung ausgeführt. Es wäre aber auch denkbar, in diese aus

Gewichtsersparnisse Löcher od. dgl. entlang der neutralen Zone anzuordnen.

Bei unserem Ausführungsbeispiel ist der Rammschutzträger durch Schrauben 5 am Türrahmen 4 befestigt. Der Prüfstempel 7 ist ein bei den herkömmlichen Prüfverfahren für Fahrzeugtüren ausgeführter und ist in der vorgeschriebenen Position im Bereich der Mittelzone belastend dargestellt.

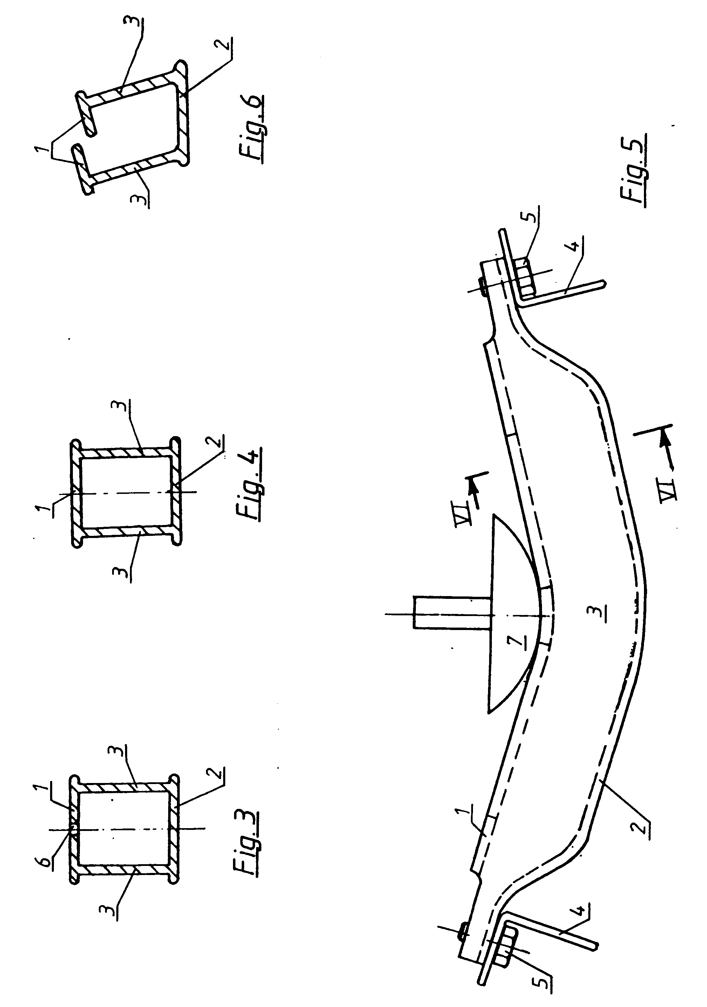

Der in Fig. 6 dargestellte deformierte Querschnitt zeigt das Ausknicken der Stege durch die in diesen Querschnitten angeordnete Ausnehmung.

Das dargestellte Beispiel ist nur eine mögliche Ausführungsvariante. Es ist auch denkbar, den Rammschutzträger in den Türrahmen einzustecken oder mittels umgebogener Enden in einer anderen beliebigen Weise anzubringen.

## Patentansprüche

1. Rammschutzträger für Türen- und Seitenwände von Kraftfahrzeugkarosserien, der wenigstens einen in Längsrichtung verlaufenden Hohlraum aufweist, dadurch gekennzeichnet, daß der Druckgurt (1) im Bereich zwischen Mittelzone und Enden jeweils wenigstens eine zur Längserstreckung parallele Ausnehmung (6) aufweist.

2. Rammschutzträger nach Anspruch 1, dadurch gekennzeichnet, daß jeweils eine Ausnehmung (6) auf einer Seite zu der ihr auf der anderen Seite der Mittelzone gegenüberliegenden, etwa die gleiche Längsachse hat.

3. Rammschutzträger nach Anspruch 1 und 2, dadurch gekennzeichnet, daß das Hohlprofil zwei Stege (3) aufweist und die Längsachse der Ausnehmung (6) im Schnitt der durch den Druckgurt (1) verlaufende Trägheitshauptachse und dem Druckgurt (1) angeordnet ist.

## Claims

1. An anti-ram beam for doors and side walls of motor vehicle bodies and having at least one cavity extending in a longitudinal direction, characterised in that the compression flange (1) has in the region between the middle zone and ends at least one cut-out (6) extending parallel with the longitudinal extension.

2. An anti-ram beam according to Claim 1, characterised in that in each case one cut-out (6) is provided on one side opposite another disposed on the other side of the middle zone and having substantially the same longitudinal axis.

3. An anti-ram beam according to Claim 1 and 2, characterised in that the hollow section has two webs (3) and in that the longitudinal axis of the cut-out (6) is disposed at the intersection between the compression flange (1) and the main axis of inertia extending through the compression flange (1).

## Revendications

1. Traverse de protection contre les chocs pour portières et panneaux latéraux des carrosseries d'automobiles, présentant au moins une cavité longitudinale, caractérisée en ce que la membrure (1) soumise à la compression comporte au moins un évidement (6) parallèle à sa grande dimension dans chacune des zones comprises entre sa partie centrale et ses extrémités.

2. Traverse de protection contre les chocs selon la revendication 1, caractérisée en ce que chacun des évidements (6) d'un côté a sensiblement le même axe longitudinal que celui qui lui fait vis-à-vis de l'autre côté de la partie centrale.

3. Traverse de protection contre les chocs selon les revendications 1 et 2, caractérisé en ce que le profilé creux comporte deux âmes (3) et l'axe longitudinal de l'évidement (6) est disposé à l'intersection de l'axe principal d'inertie, qui traverse la membrure (1) soumise à la compression, et de cette membrure (1).
